Europäisches Patentamt

European Patent Office

Office européen des brevets

(19)

(11) **EP 1 459 627 A2**

(12) **EUROPEAN PATENT APPLICATION**

(43) Date of publication:
**22.09.2004 Bulletin 2004/39**

(51) Int Cl.7: **A01N 37/10**
// (A01N37/10, 25:30, 25:04, 25:02)

(21) Application number: **04003165.0**

(22) Date of filing: **12.02.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | • **Hayashi, Kozaburo c/o Dainichiseika Color & Chem.**<br>**Tokyo 103-8383 (JP)**<br>• **Araya, Genichiro c/o Dainichiseika Color & Chem.**<br>**Tokyo 103-8383 (JP)** |
| (30) Priority: **17.03.2003 JP 2003072065** | (74) Representative: **Hartz, Nikolai, Dr.**<br>**Wächtershauser & Hartz**<br>**Weinstrasse 8**<br>**80333 München (DE)** |
| (71) Applicant: **Dainichiseika Color & Chemicals Mfg. Co., Ltd.**<br>**Chuo-ku Tokyo 103-8383 (JP)** | |
| (72) Inventors:<br>• **Iijima, Yoshihiko c/o Dainichiseika Color & Chem.**<br>**Tokyo 103-8383 (JP)** | |

(54) **Plant growth regulator and a method of producing the regulator**

(57)    A plant growth regulator and a method for preparation thereof are provided; the plant growth regulaor comprises cinnamic acid as an active component, wherein cinnamic acid is dissolved or dispersed in an aqueous medium in high concentrations. The regulator prevents useless growth of young plants such as seedlings or nursery plants, and useless growth of potted plants (Bonsai); namely it is effective for dwarfing a plant; it can improve the quality of gardening plants and horticultural or agricultural yields. Since cinnamic acid is a naturally occurring substance, the plant growth regulator comprising the acid has high concern for environment and no problems in safety and health of human bodies.

**Description**

**FIELD OF THE INVENTION**

The present invention relates to a plant growth regulator effective for dwarfing plants, and more particularly, to a plant growth regulator and a method for producing the regulator which prevents the useless growth (including "spindly growth", "unexpected growth" and "normal growth" meaning growth opposite to "dwarf growth"(abnormal growth)) of a horticultural or agricultural plant to regulate the form of the plant, thereby improving a commercial value of the plant, achieving to raise young plants(including seedlings, nursery plants, and potted plants) in a space-saving field, improving the horticultural or agricultural productivities, and further, effectively preventing without problem in safety and health of a human body the root rot and phytocidal leaf of plants by a germ.

**DESCRIPTION OF RELATED ART**

Conventionally, the dwarfing of crop plants (hereinafter, referred to as "plants" according to circumstances) has attracted special attentions and been studied in various fields. For example, in potted crop plants, i.e., plants, the balance between a pot and a plant form is important, it is generally recognized that potted plants tight in growth and short in length have high quality, and thus, techniques for suitably dwarfing plants are indispensable in production of potted plants with high quality. Further, in cultivation of vegetables in a horticultural or agricultural field, the techniques for raising young plants by using plural cells (cell-growing plants) have rapidly been used increasingly. However, since young plants of the cell-growing plants are reared in high density, the plants are apt to grow in spindly forms and techniques for effectively dwarfing the plants are required as measures for preventing the spindly growth. Thus, in these days, the techniques for dwarfing plants have been essential in both fields of the horticulture (including gardening) and agriculture.

Techniques for dwarfing plants (Japanese Laid-Open Patent Publication No.2003-018919) comprise use of plant dwarfing agent, reduced supply or provision of fertilizer components, water, air blow, contact stimulation to plants, and salt stress to plants. With consideration of labor-saving, cost, reproducibility of the effect and further facilitation of practice, the use of a plant dwarfing agent is more advantageous in the above techniques.

Currently, agents usually used in dwarfing plants are Daminozide, Chlormequat liquid, Paclobutrazol granules, Uniconazole, etc. These agents comprise chemically synthesized agricultural chemicals as main components, and the mutagenicity of some of the chemicals is reported. Further, the excessive use of some agents results in possibility of chemicals-induced sufferings. The activities of the active chemical components in the above agricultural agents are dependent on the concentration for use, thereby the knowledge about the techniques and the experience in the practice are necessary for avoiding chemicals-induced sufferings and choosing suitably usable chances (usable times ) . In addition, on actual use of the agents, the specific caution must be paid. If the above matters are taken into little consideration, chemicals-induced sufferings and environmental pollution may actually occur.

There is, however, no proposed dwarfing agent with no possibility of chemicals-induced sufferings and environmental pollution; it is strongly desired to develop a dwarfing agent which is harmless to human bodies, less expensive, convenient in treatment, and good in work operation.

**SUMMARY OF THE INVENTION**

In view of the foregoing, it is an object of the present invention to provide a plant growth regulator which assuredly regulates growth of plants, thereby shows an excellent dwarfing effect, and is capable of improving the quality of gardening plants and horticultural or agricultural crops. Further, the regulator is excellent in work operation, environmentally sound, and non-toxic, and further has no problem in safety and health.

As a result of dedicated research to achieve the above-mentioned object, the inventors of the present invention have found out that cinnamic acid prevents spindly growth of gardening plants and greatly improves horticultural or agricultural crops and functions as an excellent dwarfing agent, and completed the present invention. In other words, according to the present invention, there are provided a plant growth regulator and a method for producing the plant growth regulator comprising cinnamic acid.

According to the present invention, there is provided a plant growth regulator which assuredly prevent the useless growth of plants, shows an excellent dwarfing activity, and is capable of improving the quality of gardening plants and horticultural and agricultural crops. In addition, the plant growth regulator of the present invention is excellent in work operation, environment-friendly, and non-toxic, and further has no problem in safety and health.

## DETAILED DESCRIPTION OF THE PREFERRED EMBODIMENTS

The present invention will be described more specifically below with reference to preferred embodiments.

Cinnamic acid used as a plant growth regulator in the present invention is a plant-related substance which is one of naturally occurring substances, further a food additive, and therefore, a substance with a extremely high level of safety in human bodies and in the environment. Since cinnamic acid has antibacterial and fungicide activities (Japanese Laid-Open Patent Publication No.H05-117125), and the plant growth regulator of the present invention offers advantages in keeping environmental sanitation around plants, as well as dwarfing plants.

Targeted plants for dwarfing in the present invention are young plants such as seedlings and nursery plants; namely young plants of seedling beds(including cells for cell seedlings), or nursery to be planted in the same field or be transplanted to other fields or other large vessels, containers or trays such as large cells, pots and the likes (hereinafter called in terms of young plants or a young plant) . In addition, the young plants of the present invention also include plants to be grown (cultivated, raised, reared) in large vessels, containers or trays such as large cells, pots and the likes.

The young plants belong to ones of horticultural and agricultural plants. The horticultural plants are preferable in the present invention. Particularly, gardening plants and vegetable plants are more preferable in the horticultural plants.

Examples of target gardening plants are poinsettia, geranium, hydrangea, chrysanthemum, lily, morning glory and petunia. Particularly, the regulator of the present invention has significant effects on young plants of poinsettia and geranium.

Further, a wide variety of vegetable plants is the target plants of the present invention, and for example, the regulator has significant effects on young plants of Chinese cabbage, cabbage, carrot, green onion, onion, ging-gengcai, Japanese radish, lettuce, field peas, cauliflower, broccoli, burdock, radish, turnip, tomato, cucumber, eggplant, squash, watermelon, prince melon, Cucumis melo var. makuwa, melon and beans plants.

Examples of the agricultural plants are rice plants and the likes.

In general, dwarfing agents are grouped into a foliar spray and a soil application agent (including soil injection agent). In the former, a dwarfing active component is taken up from leaves and stems to express a dwarfing effect. In the latter, a dwarfing active component is taken up from roots to express a dwarfing effect. In the foliar spray, the dwarfing agent is diluted with approximately two hundreds parts of water, and the obtained aqueous solution (0.5 weight %) is applied to leaf and/or stem surfaces. It is effective to apply at a time when sprouts begin to grow, but there are few plants on that no effect is exerted. Further, the agent remains on surfaces of leaves and stems in few cases and the remaining agent sometimes transfers from the surfaces of the plants to a human body on contact with the plants, and, thereby, problems in safety and health produce when the agent is highly toxic. Meanwhile, the soil application agent is directly applied to soil, potting compost or the likes and is capable of easer exerting the dwarfing effect; the soil application agent is used when the foliar spray is not effective. Further, the soil application agent does not remain on surfaces of plants, and it is not necessary to consider the transfer of the agent from a surface of a plant to a human body.

The plant growth regulator of the present invention comprises cinnamic acid as an active ingredient(component) to a plant to be dwarf; cinnamic acid is a naturally occurring substance obtained plants and has no problems in safety and health, and, therefore, is capable of being used as a foliar spray and a soil application agent. Particularly, its dwarfing effect is more expected when the regulator is used as a soil injection agent. Cinnamic acid as an active ingredient is also a food additive and is not suspected of mutagenicity and activities of environmental hormone found in other dwarfing agents containing chemically synthesized substances as active components. The plant growth regulator of this invention, thereby, has a remarkably high level of safety in human health and environmental pollution.

In general, in terms of activity, dwarfing agents are classified into an antiauxin agent and an anti-gibberellin agent; the plant growth regulator of the present invention belongs to the said antiauxin agent. In other words, it is assumed that cinnamic acid, an active ingredient of the plant growth regulator of the present invention, disrupts the action of auxin that is a plant hormone which contributes to cell division and elongation and the disruption, thereby, results in repressed cell division, abnormally progressed respiration, etc.; as a result, the internode elongation is repressed and, thus, the dwarfing effect is exerted. The plant growth regulator of the present invention represses the internode elongation and thereby enables to produce potted plants of high-quality with improved forms of the plants. In addition, the plant growth regulator also can prevent the useless growth of young plants (cell-seedlings) of vegetable plants and further has an action to promote blooming; thus the plant growth regulator of the invention is high in use value.

For example, the plant growth regulator of the present invention is applied to plants in various manners; the roots and stems of plants are soaked in a solution or dispersion of the regulator; the plants take up cinnamic acid in the solution or dispersion originally existing around roots; the taken up regulator functions as a dwarfing agent. The dwarfing agent (cinnamic acid) is taken up from a stem, leaf or root portion and the taken up cinnamic acid moves inside the plant body and provides the dwarfing effect. The dwarfing agent moves over the whole plant body after being taken up and that movement allows fluctuated application of some extent.

A utilization type of the plant growth regulator of the present invention is not limited particularly. Cinnamic acid that is a plant growth regulating substance is used in a powdered state or a granule state, permitting easy dispersion in the water, or the above plant growth regulator substance is used in a liquid state such as a solution, an emulsion, a suspension or a dispersion in which the substance is dissolved, emulsified, suspended or dispersed, respectively.

When cinnamic acid is used in a liquid state, the liquid containing cinnamic acid may be diluted to a predetermined concentration in advance, or a concentrated liquid containing cinnamic acid may be diluted to be used at the time of actual use. Further, when necessary, it may be possible to mix a spreading agent, another plant growth regulator, another dwarfing agent and/or another additive to use. In addition, cinnamic acid can be used as a clathrate compound included with dextrin, powdered particles supported with such a carrier as zeolite or silica, or as the suspension of such powdered particles.

The use amount of the plant growth regulator of the present invention is not limited particularly, but the use amount particularly effective is in a range of 0.0001 to 0.2 parts by weight of cinnamic acid to 100 parts by weight of soil (comprising fertilizer, manure and/or additives) used in the invention. If the use amount is larger than the above range, the regulator sometimes results in an adverse effect on the growth of a plant. While if smaller, the regulator sometimes results only in an insufficient dwarfing effect.

An aqueous dispersion as a plant growth regulator that is a preferred embodiment of the present invention is prepared by a generally-known dispersion method using a dispersant. For example, cinnamic acid is mixed with a dispersant and water, the mixture is added into a vessel of a dispersion apparatus(a dispersion machine) such as a sandmill and subj ected to dispersion processing at 120 rpm for about three hours, and the plant growth regulator is thus obtained in an aqueous dispersion liquid state.

A sand mill used in the present invention has, for example, a machine equipped with a mixing mechanism capable of mixing dispersion media in a cylindrical container, in which spherical members with small diameters (of approximately 0.2 to 5.0mm) as dispersion media are filled in 30 to 95% of the internal capacity. The capacity of the cylindrical container ranges from 0.3 to 250 litters. As a material for the container, for example, stabilized zirconia, alumina and rubber are preferable. As a material for the dispersion media, for example, stabilized zirconia, alumina and glass beads can be used. As use conditions, for example, it is preferable that the number of revolutions ranges from 300 to 3,000 rpm, cinnamic acid is supplied in a slurry supply amount of 0.2 to 5,000 ml/min, and when necessary, the dispersion is passed through the dispersion apparatus plural times.

Used as aqueous media are water, and mixed solvents of water and organic solvents such as water-soluble alcohols, ketones, esters, and ethanol amines, but particularly, water is preferable. The average particle diameter of cinnamic acid in the dispersion is not limited particularly, but preferably 3$\mu$m or less.

As dispersants used in the present invention, any dispersants are usable, as long as the dispersants are conventional aqueous media. For example, naturally occurring materials, inorganic compounds, polymers or specific surfactants are used. Examples of the naturally occurring materials are lignin sulfonates and carboxymethylcelluloses (CMC). Examples of the inorganic compounds are condensed phosphates such as hexametaphosphates. Examples of the polymers are poly acrylates, salts of acrylic-maleic copolymers, and salts of olefin-maleic copolymers. Examples of specific surfactants are alkyldiphenyl ether disulfonates and polycyclic specific nonionic surfactants.

As the aqueous dispersants, various surfactants are used such as anioic surfactants of naturally occurring substances, cationic surfactants, nonionic surfactants, and amphoteric surfactants. Examples of the anionic surfactants are sulfonates of fatty oils such as castor oil, rapeseed oil and olive oil and salts of sulfuric esters of fatty oils such as castor oil, rapeseed oil and olive oil, aerosol surfactants obtained from addition reaction of sulfuric acid and esters of maleic acid and higher alcohols, amidosulfates obtained from condensation of fatty acid chlorides and taurine that is aminosulfonic acid, naphthalene sulfates, and $\alpha$-olefin sulfates.

Examples of the cationic surfactants are acetic acid salt of alkyl amine, HCl salt of alkylamine, primary to tertiary amine salts such as alkyldiethanolamine salts, quaternary ammonium salts such as alkyldimethylbenzyl ammonium chloride, and pyridinium salts.

Examples of the nonionic surfactants are surfactants of an ethylene oxide addition polymerization type such as aliphatic polyoxyethylene esters such as aliphatic esters of polyhydric alcohols such as glycerin, sorbitol, sorbitan and sucrose, polyoxyalkylene ethers obtained from addition reaction of ethylene oxide or propylene oxide and higher alcohols, alkylphenols or castor oil, polyoxyethylene adducts of sorbitol and sorbitan fatty acid esters, and surfactants of fatty acid alkylolamide type such as monoethanol amine condensates and diethanol amine condensates.

Examples used as the amphoteric surfactants are surfactants of betaine types and surfactants of amino acid types such as dodecylaminoethyl glycine chloride and N-tetradecyl taurine sodium salt. Particularly preferred among the dispersants as described above are dispersants of naturally occurring substances such as lignin sulfonates and CMCs with less possibilities of environmental pollution.

In implementing the method of dwarfing plants of the present invention, for example, a dispersion with cinnamic acid of about 30 weight % is prepared, and when used, is diluted 30 to 3000 times to be used. In the case of the aqueous dispersion with cinnamic acid of about 10 weight %, the dispersion is diluted 10 to 1000 times when used, and is used.

It is a feature of the concentrated aqueous solution of cinnamic acid, an active ingredient of the plant growth regulator of the present invention, that cinnamic acid is dissolved in water in a concentration exceeding its saturation solubility (maximum solubility: 0.546g/l) in water at 25°C. Since the solubility of free cinnamic acid in water is thus low, when a concentrated cinnamic-acid solution is required, a water-soluble solubilizer can be used for the preparation of the concentrated cinnamic-acid solution. By using the solubilizer, it is possible to prepare the cinnamic-acid solution (cinnamic acid is dissolved as a salt) in which cinnamic acid is dissolved in a high concentration exceeding the saturation solubility in water at 25°C.

Usable as the solubilizers in the present invention are salts of weak acids and strong bases or bases whose aqueous solutions are alkaline, and particularly preferred are solubilizers which exhibit the pH buffering activity, have less possibility of environmental pollution and safe to human bodies. Examples preferred as the salts of weak acids and strong bases are tripolyphosphate salts, polyphosphate salts, pyrophosphate salts, phosphate salt, monohydrogenphosphate salts, dihydrogenphosphate salts, carbonate salts, and acetate salts. The above salts are not limited particularly. Examples of preferred salts are salts of sodium, potassium, ammonium, amine or the likes. Examples preferred as the bases are sodium hydroxide, potassium hydroxide, ammonium hydroxide. Examples particularly preferred as the solubilizer is at least one of the group consisting potassium tripolyphosphate, sodium tripolyphosphate, ammonium tripolyphosphate, potassium hydroxide, sodium hydroxide, ammonium hydroxide, potassium carbonate, sodium carbonate, ammonium carbonate, potassium acetate, sodium acetate, and ammonium acetate. Sodium tripolyphosphate, potassium hydroxide, potassium carbonate, and sodium acetate among the above substances have been at present designated as food additives; those are the most preferable.

In producing the concentrated cinnamic acid aqueous solution, for example, a solubilizer aqueous solution is prepared in advance, and cinnamic acid is added to the solubilizer solution and mixed sufficiently to be dissolved, whereby it is possible to obtain with ease the concentrated solution. The use amount of the solubilizer is not particularly limited, but preferably ranges from 35 weight % to 300 weight % (based on the whole weight of cinnamic acid).

By thus using the solubilizer, the content of cinnamic acid exceeds the maximum solubility of free cinnamic acid in water at RT, and the concentrated aqueous solution with cinnamic acid of 25 weight% or less can be obtained. In terms of storage space, efficiency in transportation and so on, the preferred concentration of the concentrated aqueous solution ranges from 0.5 weight% to 25 weight%.

In using the plant growth regulator comprised of the concentrated cinnamic acid aqueous solution of the present invention, as a general guideline, for example, the concentrated aqueous solution with about 10 weight% of cinnamic acid is diluted 10 to 1000 times and used.

A method for treating the young plants with the plant growth regulator of this invention and applying the regulator to the young plants is particularly not limited. Concrete examples of it are: 1) a method for mixing use soil (to be used for rearing the young plants) with the regulator, 2) a method for dipping the young plants in the regulator, 3) irrigating the young plants with the regulator, 4) spraying the regulator on the young plants, and 5) the likes.

**Examples**

The present invention will be described more specifically below with reference to examples. In addition, "%" in following descriptions is on a weight basis.

Example 1

(1) Preparation of 0.3% and 0.5% cinnamic acid aqueous solutions

18.4g of potassium hydroxide was dissolved in 400ml of distilled water at 20°C, 50g of cinnamic acid was added to the potassium hydroxide solution and dissolved by stirring, the resultant solution was diluted with distilled water until the total volume of solution was 500ml, and thus a cinnamic acid aqueous solution (pH8. 8) was prepared in a concentration of 10%. The aqueous solution was further diluted with distilled water 33.3 times or 20 times, and thus a cinnamic acid aqueous solution in a concentration of 0.3% or 0.5% was prepared, respectively.

(2) Dwarfing test of Poinsettia young plant

Poinsettia young plants with heights of about 10cm were planted and fixed in pots (diameter of 14.5cm and depth of 14.5cm), and cultivated continuously. On the 49th and 78th days, 100ml of 0.3% or 0.5% cinnamic acid aqueous solution prepared as described above was added to the nursery soil of each of 30 pots, and thus 0.3% cinnamic acid aqueous solution addition group and 0.5% cinnamic acid aqueous solution addition group were obtained. Further, 30 pots were prepared as a comparative group on which general watering was performed. The cultivation of young plants of each group was continued. On the 93rd day, the length from a surface of the soil of each cultivation pot to a head portion of the poinsettia young plant was measured, the dwarfing rate (%) was calculated using the following equation, and thus the dwarfing effect of cinnamic acid aqueous solution was examined (the same way was applied to following examples). Dwarfing rate (%) = [(the plant height of the comparative

group) - (the plant height of an addition group) /the plant height

of the comparative group] x 100

The results are shown in Table 1. From the results in Table 1, it became evident that the cinnamic acid aqueous solutions are effective in dwarfing poinsettia young plants.

In addition, "plant height" in all the tables below was an average of heights from a surface of the soil of a pot used in each test to a head portion of the plant.

Table 1

| Tested Groups | Plant Height (cm) | Dwarfing Rate (%) |
|---|---|---|
| 0.3% Aqueous Solution Addition Group | 19.2 | 17.6 |
| 0.5% Aqueous Solution Addition Group | 18.1 | 22.3 |
| Comparative Group | 23.3 | |

Example 2

(1) Preparation 0.1% and 0.01% cinnamic acid aqueous dispersions

160g of cinnamic acid, 80g of dispersant (lignin sulfonic sodium) and 293g of water were mixed, 1, 800g of glass beads (with diameters of 1 to 1.25mm) were further added, the resultant was added into a vessel of a dispersion apparatus (RM test sand mill with six parallel barrels) and underwent dispersion processing at 120rpm for three hours, and 30% cinnamic acid dispersion (with the average diameter of cinnamic acid of 0.3μm) was prepared. The dispersion was diluted with distilled water 300 times or 3,000 times, and thus 0.1% cinnamic acid dispersion and 0.01% cinnamic acid dispersion were prepared, respectively.

(2) Dwarfing test of geranium young plant

30 pots of geranium young plants each with 10 to 12 leaves and a height of 7cm ware purchased, and placed in a built-up indoor aluminum greenhouse (440x840x1500mm) at 25°C. On the 3rd day, the cinnamic dispersions as described above were added to the geranium pots. Among 30 pots, 10 pots were prepared as a 0.01% cinnamic acid dispersion addition group, and 100ml of the 0.01% cinnamic acid dispersion was added to the nursery soil of each pot. Another 10 pots were prepared as a 0.1% cinnamic acid dispersion addition group, and 100ml of the 0.1% cinnamic acid dispersion was added to the nursery soil of each pot. Remaining 10 pots were prepared as a comparative group, and instead of the cinnamic dispersion, 100ml of water was added to each pot. Then, the cultivation was continued on the pots in each group under general conditions. The cultivation was continued on geraniums of the pots in each group, and on the 24th day, geraniums in each group started blooming. The cultivation was further continued. On the 44th day after the placement, heights of geraniums of pots in each group were measured, the dwarfing rate (%) was calculated, and the dwarfing effect of cinnamic acid dispersion on geranium young plants was examined. The results are shown in Table 2. From the results in Table 2, it became evident that the cinnamic acid dispersions are effective in dwarfing geranium young plants.

Table 2

| Tested Groups | Plant Height (cm) | Dwarfing Rate (%) |
|---|---|---|
| 0.01% Dispersion Addition Group | 13.5 | 12.9 |
| 0.1% Dispersion Addition Group | 6.1 | 60.6 |
| Comparative Group | 15.5 | |

Example 3

(1) Preparation of 0.1% and 0.3% cinnamic acid aqueous solutions

18.4g of potassium hydroxide was dissolved in 400ml of distilled water at 20°C, 50g of cinnamic acid was added to the potassium hydroxide solution and dissolved by stirring, the resultant solution was diluted with distilled water until the total volume of solution was 500ml, and thus 10% cinnamic acid aqueous solution (pH8.8) was prepared. The aqueous solution was further diluted with distilled water 100 times or 33.3 times, and 0.1% cinnamic acid aqueous solution and 0.3% cinnamic acid aqueous solution were prepared, respectively.

(2) Dwarfing test of Chinese cabbage young plant

Nursery soil for house use was filled into a polyethylene joint pot (36 cells: 45×45×30mm/cell), water was sufficiently given to the soil, and seeds of Chinese cabbage were sowed. After seeding, the pot was placed in the same greenhouse as described above to sprout. Subsequently, on the 4th day, the cinnamic aqueous acid solutions were added to the nursery soil in the joint pot.

Among 36 cells, 12 cells were prepared as a 0.1% cinnamic acid aqueous solution addition group, and 5ml of the 0.1% cinnamic acid aqueous solution was added to the nursery soil of each cell. Another 12 cells were prepared as a 0.3% cinnamic acid aqueous solution addition group, and 5ml of the 0.3% cinnamic acid aqueous solution was added to the nursery soil of each cell. Remaining 12 cells were prepared as a comparative group in which 5ml of water is added to each cell, instead of the cinnamic acid aqueous solution. Subsequently, the cultivation of Chinese cabbage young plants in each group was continued under general conditions. On the 22nd day, the heights of young plants in each group were measured, the dwarfing rate (%) was calculated, and the dwarfing effect of cinnamic acid aqueous solution on Chinese cabbage young plants was examined. The results are shown in Table 3. From the results in Table 3, it became evident that the cinnamic acid aqueous solutions are effective in dwarfing Chinese cabbage young plants.

Table 3

| Tested Groups | Plant Height (cm) | Dwarfing Rate (%) |
|---|---|---|
| 0.1% Aqueous Solution Addition Group | 7.0 | 23.9 |
| 0.3% Aqueous Solution Addition Group | 6.9 | 25.0 |
| Comparative Group | 9.2 | |

Example 4

(Dwarfing test of cabbage young plant)

Nursery soil for house use was filled into the same polyethylene joint pot as described above, water was sufficiently given to the soil, and seeds of cabbage were sowed. After seeding, the pot was placed in the same greenhouse as described above to sprout. Subsequently, on the 4th day, the cinnamic acid aqueous solutions were added to the nursery soil in the joint pot. Among 36 cells, 12 cells were prepared as a 0.1% cinnamic acid aqueous solution addition group, and 5ml of the 0.1% cinnamic acid aqueous solution in Example 3 was added to the nursery soil of each cell. Another 12 cells were prepared as 0.3% cinnamic acid aqueous solution addition group, and 5ml of the 0.3% cinnamic acid aqueous solution in Example 3 was added to the nursery soil of each cell. Remaining 12 cells were prepared as a comparative group in which 5ml of water is added to each cell, instead of the cinnamic acid aqueous solution. Subsequently, the cultivation of cabbage young plants in each group was continued under general conditions. On the 22nd day, the heights of young plants in each group were measured, the dwarfing rate (%) was calculated, and the dwarfing effect of cinnamic acid aqueous solution on cabbage young plants was examined. The results are shown in Table 4.

From the results in Table 4, it became evident that the cinnamic acid aqueous solutions are effective in dwarfing cabbage young plants.

Table 4

| Tested Groups | Plant Height (cm) | Dwarfing Rate (%) |
|---|---|---|
| 0.1% Aqueous Solution Addition Group | 7.9 | 14.1 |

Table 4   (continued)

| Tested Groups | Plant Height (cm) | Dwarfing Rate (%) |
|---|---|---|
| 0.3% Aqueous Solution Addition Group | 6.1 | 33.7 |
| Comparative Group | 9.2 | |

Example 5

(1) Preparation of 0.05% and 0.2% cinnamic acid aqueous solutions

50g of sodium tripolyphosphate was dissolved in 400ml of distilled water at 80°C, 17.5g of cinnamic acid was added to the sodium tripolyphosphate solution and dissolved by stirring, the resultant solution was diluted with distilled water until the total volume of solution was 500ml, and thus 3.5% cinnamic acid aqueous solution (pH6.5) was prepared. The aqueous solution was further diluted with distilled water 70 times or 17.5 times, and 0.05% cinnamic acid aqueous solution and 0.2% cinnamic acid aqueous solution were prepared, respectively.

(2) Dwarfing test of carrot young plant

Nursery soil for house use was filled into paper joint pots (each with 24 cells: 34x43x50mm/cell), water was sufficiently given to the soil, and seeds of carrots were sowed. After seeding, the pot was placed in the same greenhouse as described above to sprout. Subsequently, on the 5th day, the cinnamic aqueous acid solutions were added to the nursery soil in the joint pots. One of the joint pots (24 cells) was prepared as a 0.05% cinnamic acid aqueous solution addition group, and 5ml of the 0. 05% cinnamic acid aqueous solution was added to the nursery soil of each cell. Another one of the join pots was prepared as a 0.2% cinnamic acid aqueous solution addition group, and 5ml of the 0.2% cinnamic acid aqueous solution was added to the nursery soil of each cell. The other one of the joint pots was prepared as a comparative group in which 5ml of water is added to each cell, instead of the cinnamic acid aqueous solution. Subsequently, the cultivation of carrot young plants in each group was continued under general conditions. On the 27th day, the heights of young plants in each group were measured, the dwarfing rate (%) was calculated, and the dwarfing effect of cinnamic acid aqueous solution on carrot young plants was examined. The results are shown in Table 5. From the results in Table 5, it became evident that the 0.05% and 0.2% cinnamic acid aqueous solutions are effective in dwarfing carrot young plants.

Table 5

| Tested Groups | Plant Height (cm) | Dwarfing Rate (%) |
|---|---|---|
| 0.05% Aqueous Solution Addition Group | 7.9 | 7.1 |
| 0.2% Aqueous Solution Addition Group | 6.9 | 18.8 |
| Comparative Group | 8.5 | |

Example 6

(Dwarfing test of green onion young plant)

In the same way as in Example 5 except that seeds of green onion were sowed, the dwarfing effect of cinnamic acid aqueous solution on green onion young plants was examined. The results are shown in Table 6. From the results in Table 6, it became evident that the cinnamic acid aqueous solutions are effective in dwarfing green onion young plants.

Table 6

| Tested Groups | Plant Height (cm) | Dwarfing Rate (%) |
|---|---|---|
| 0.05% Aqueous Solution Addition Group | 7.2 | 25.8 |
| 0.2% Aqueous Solution Addition Group | 5.6 | 42.3 |
| Comparative Group | 9.7 | |

Example 7

(Dwarfing test of onion young plant)

In the same way as in Example 5 except that seeds of onion were sowed, the dwarfing effect of cinnamic acid aqueous solution on onion young plants was examined. The results are shown in Table 7. From the results in Table 7, it became evident that the cinnamic acid aqueous solutions are effective in dwarfing onion young plants.

Table 7

| Tested Groups | Plant Height (cm) | Dwarfing Rate (%) |
|---|---|---|
| 0.05% Aqueous Solution Addition Group | 8.0 | 15.8 |
| 0.2% Aqueous Solution Addition Group | 7.5 | 21.1 |
| Comparative Group | 9.5 | |

Example 8

(Dwarfing test of qing-geng-caiyoung plant)

In the same way as in Example 5 except that seeds of green onion were sowed, and that plant heights were measured on the 20th day, the dwarfing effect of cinnamic acid aqueous solution on qing-geng-cai young plants was examined. The results are shown in Table 8. From the results in Table 8, it became evident that the cinnamic acid aqueous solutions are effective in dwarfing qing-geng-cai young plants.

Table 8

| Tested Groups | Plant Height (cm) | Dwarfing Rate (%) |
|---|---|---|
| 0.05% Aqueous Solution Addition Groups | 6.3 | 7.4 |
| 0.2% Aqueous Solution Addition Group | 4.3 | 36.8 |
| Comparative Group | 6.8 | |

Example 9

(Dwarfing test of Japanese radish young plant)

In the same way as in Example 5 except that seeds of Japanese radish were sowed, the dwarfing effect of cinnamic acid aqueous solution on Japanese radish young plants was examined. The results are shown in Table 9. From the results in Table 9, it became evident that the cinnamic acid aqueous solutions are effective in dwarfing Japanese radish young plants.

Table 9

| Tested Groups | Plant Height (cm) | Dwarfing Rate (%) |
|---|---|---|
| 0.05% Aqueous Solution Addition Group | 15.3 | 1.9 |
| 0.2% Aqueous Solution Addition Group | 10.9 | 30.1 |
| Comparative Group | 15.6 | |

Example 10

(Dwarfing test of lettuce young plant)

In the same way as in Example 5 except that seeds of lettuce were sowed, and that heights of young plants in each group were measured on the 20th day, the dwarfing effect of cinnamic acid aqueous solution on lettuce young plants was examined. The results are shown in Table 10. From the results in Table 10, it became evident that the cinnamic acid aqueous solutions are effective in dwarfing lettuce young plants.

Table 10

| Tested Groups | Plant Height (cm) | Dwarfing Rate (%) |
|---|---|---|
| 0.05% Aqueous Solution Addition Group | 5.7 | 6.6 |
| 0.2% Aqueous Solution Addition Group | 4.3 | 29.5 |
| Comparative Group | 6.1 | |

Example 11

(Dwarfing test of field peas young plant)

In the same way as in Example 5 except that seeds of field peas were sowed, 0.1% and 0.3% cinnamic acid solutions in example 3 were added to the nursery soil in the joint pot, and that heights of young plants in each group were measured on the 24th day, the dwarfing effect of cinnamic acid aqueous solution on field peas young plants was examined. The results are shown in Table 11. From the results in Table 11, it became evident that the cinnamic acid aqueous solutions are effective in dwarfing field peas young plants.

Table 11

| Tested Groups | Plant Height (cm) | Dwarfing Rate (%) |
|---|---|---|
| 0.1% Aqueous Solution Addition Group | 24.3 | 19.5 |
| 0.3% Aqueous Solution Addition Group | 18.1 | 40.1 |
| Comparative Group | 30.2 | |

Example 12

(Dwarfing test of cauliflower young plant)

In the same way as in Example 5 except that seeds of cauliflower were sowed, the cinnamic acid solutions were added to the nursery soil in the joint pot on the 4th day, and that heights of young plants in each group were measured on the 20th day, the dwarfing effect of cinnamic acid aqueous solution on cauliflower young plants was examined. The results are shown in Table 12. From the results in Table 12, it became evident that the cinnamic acid aqueous solutions are effective in dwarfing cauliflower young plants.

Table 12

| Tested Groups | Plant Height (cm) | Dwarfing Rate (%) |
|---|---|---|
| 0.05% Aqueous Solution Addition Group | 6.8 | 22.7 |
| 0.2% Aqueous Solution Addition Group | 5.0 | 43.2 |
| Comparative Group | 8.8 | |

Example 13

(Dwarfing test of broccoli young plant)

In the same way as in Example 12 except that seeds of broccoli were sowed, the dwarfing effect of cinnamic acid aqueous solution on broccoli young plants was examined. The results are shown in Table 13. From the results in Table 13, it became evident that the cinnamic acid aqueous solutions are effective in dwarfing broccoli young plants.

Table 13

| Tested Groups | Plant Height (cm) | Dwarfing Rate (%) |
|---|---|---|
| 0.05% Aqueous Solution Addition Group | 8.8 | 6.4 |
| 0.2% Aqueous Solution Addition Group | 6.4 | 31.9 |

Table 13   (continued)

| Tested Groups | Plant Height (cm) | Dwarfing Rate (%) |
|---|---|---|
| Comparative Group | 9.4 | |

Example 14

(Dwarfing test of burdock young plant)

In the same way as in Example 12 except that seeds of burdock were sowed, the dwarfing effect of cinnamic acid aqueous solution on burdock young plants was examined. The results are shown in Table 14. From the results in Table 14, it became evident that the cinnamic acid aqueous solutions are effective in dwarfing burdock young plants.

Table 14

| Tested Groups | Plant Height (cm) | Dwarfing Rate (%) |
|---|---|---|
| 0.05% Aqueous Solution Addition Group | 4.9 | 21.0 |
| 0.2% Aqueous Solution Addition Group | 4.3 | 30.6 |
| Comparative Group | 6.2 | |

Example 15

(Dwarfing test of radish young plant)

In the same way as in Example 12 except that seeds of radish were sowed, the dwarfing effect of cinnamic acid aqueous solution on radish young plants was examined. The results are shown in Table 15. From the results in Table 15, it became evident that the cinnamic acid aqueous solutions are effective in dwarfing radish young plants.

Table 15

| Tested Groups | Plant Height (cm) | Dwarfing Rate (%) |
|---|---|---|
| 0.05% Aqueous Solution Addition Group | 8.1 | 11.0 |
| 0.2% Aqueous Solution Addition Group | 7.1 | 22.0 |
| Comparative Group | 9.1 | |

Example 16

(Dwarfing test of turnip young plant)

In the same way as in Example 12 except that seeds of color turnip were sowed, the dwarfing effect of cinnamic acid aqueous solution on turnip young plants was examined. The results are shown in Table 16. From the results in Table 16, it became evident that the cinnamic acid aqueous solutions are effective in dwarfing turnip young plants.

Table 16

| Tested Groups | Plant Height (cm) | Dwarfing Rate (%) |
|---|---|---|
| 0.05% Aqueous Solution Addition Group | 7.0 | 23.1 |
| 0.2% Aqueous Solution Addition Group | 6.0 | 34.1 |
| Comparative Group | 9.1 | |

Example 17

(Dwarfing test of tomato young plant)

In the same way as in Example 12 except that seeds of tomato were sowed, and that the cinnamic acid solutions were added to the nursery soil of the joint pot on the 7th day, the dwarfing effect of cinnamic acid aqueous solution on tomato young plants was examined. The results are shown in Table 17. From the results in Table 17, it became evident that the cinnamic acid aqueous solutions are effective in dwarfing tomato young plants.

Table 17

| Tested Groups | Plant Height (cm) | Dwarfing Rate (%) |
|---|---|---|
| 0.05% Aqueous Solution Addition Group | 7.3 | 20.7 |
| 0.2% Aqueous Solution Addition Group | 6.1 | 33.7 |
| Comparative Group | 9.2 | |

Example 18

(Dwarfing test of cucumber young plant)

In the same way as in Example 17 except that seeds of cucumber were sowed, the dwarfing effect of cinnamic acid aqueous solution on cucumber young plants was examined. The results are shown in Table 18. From the results in Table 18, it became evident that the cinnamic acid aqueous solutions are effective in dwarfing cucumber young plants.

Table 18

| Tested Groups | Plant Height (cm) | Dwarfing Rate (%) |
|---|---|---|
| 0.05% Aqueous Solution Addition Group | 7.8 | 21.2 |
| 0.2% Aqueous Solution Addition Group | 6.2 | 37.4 |
| Comparative Group | 9.9 | |

Example 19

(Dwarfing test of eggplant young plant)

In the same way as in Example 17 except that seeds of eggplant were sowed, and that plant heights were measured on the 25th day, the dwarfing effect of cinnamic acid aqueous solution on eggplant young plants was examined. The results are shown in Table 19. From the results in Table 19, it became evident that the cinnamic acid aqueous solutions are effective in dwarfing eggplant young plants.

Table 19

| Tested Groups | Plant Height (cm) | Dwarfing Rate (%) |
|---|---|---|
| 0.05% Aqueous Solution Addition Group | 2.9 | 12.1 |
| 0.2% Aqueous Solution Addition Group | 2.3 | 30.3 |
| Comparative Group | 3.3 | |

Example 20

(Dwarfing test of squash young plant)

In the same way as in Example 17 except that seeds of squash were sowed, the dwarfing effect of cinnamic acid aqueous solution on squash young plants was examined. The results are shown in Table 20. From the results in Table 20, it became evident that the cinnamic acid aqueous solutions are effective in dwarfing squash young plants.

Table 20

| Tested Groups | Plant Height (cm) | Dwarfing Rate (%) |
|---|---|---|
| 0.05% Aqueous Solution Addition Group | 6.3 | 27.6 |
| 0.2% Aqueous Solution Addition Group | 4.3 | 50.6 |

Table 20   (continued)

| Tested Groups | Plant Height (cm) | Dwarfing Rate (%) |
|---|---|---|
| Comparative Group | 8.7 | |

Example 21

(Dwarfing test of watermelon young plant)

In the same way as in Example 17 except that seeds of watermelon were sowed, and that plant heights were measured on the 27th day, the dwarfing effect of cinnamic acid aqueous solution on watermelon young plants was examined. The results are shown in Table 21. From the results in Table 21, it became evident that the cinnamic acid aqueous solutions are effective in dwarfing watermelon young plants.

Table 21

| Tested Groups | Plant Height (cm) | Dwarfing Rate (%) |
|---|---|---|
| 0.05% Aqueous Solution Addition Group | 9.3 | 15.5 |
| 0.2% Aqueous Solution Addition Group | 7.9 | 28.2 |
| Comparative Group | 11.0 | |

Example 22

(Dwarfing test of newmelon young plant)

In the same way as in Example 21 except that seeds of newmelon were sowed, the dwarfing effect of cinnamic acid aqueous solution on newmelon young plants was examined. The results are shown in Table 22. From the results in Table 22, it became evident that the cinnamic acid aqueous solutions are effective in dwarfing newmelon young plants.

Table 22

| Tested Groups | Plant Height (cm) | Dwarfing Rate (%) |
|---|---|---|
| 0.05% Aqueous Solution Addition Group | 7.3 | 6.4 |
| 0.2% Aqueous Solution Addition Group | 4.9 | 37.2 |
| Comparative Group | 7.8 | |

Example 23

(Dwarfing test of Cucumis melo var. makuwa young plant)

In the same way as in Example 21 except that seeds of Cucumis melo var. makuwa were sowed, the dwarfing effect of cinnamic acid aqueous solution on Cucumis melo var. makuwa young plants wasexamined. TheresultsareshowninTable23. Fromtheresults in Table 23, it became evident that the cinnamic acid aqueous solutions are effective in dwarfing Cucumis melo var. makuwa young plants.

Table 23

| Tested Groups | Plant Height (cm) | Dwarfing Rate (%) |
|---|---|---|
| 0.05% Aqueous Solution Addition Group | 6.1 | 6.2 |
| 0.2% Aqueous Solution Addition Group | 4.7 | 27.7 |
| Comparative Group | 6.5 | |

Example 24

(Dwarfing test of price melon young plant)

In the same way as in Example 21 except that seeds of prince melon were sowed, the dwarfing effect of cinnamic acid aqueous solution on prince melon young plants was examined. The results are shown in Table 24. From the results in Table 24, it became evident that the cinnamic acid aqueous solutions are effective in dwarfing prince melon young plants.

Table 24

| Tested Groups | Plant Height (cm) | Dwarfing Rate (%) |
|---|---|---|
| 0.05% Aqueous Solution Addition Group | 5.3 | 5.4 |
| 0.2% Aqueous Solution Addition Group | 4.1 | 26.8 |
| Comparative Group | 5.6 | |

Example 25

(Dwarfing test of melon young plant)

In the same way as in Example 17 except that seeds of melon were sowed, and that plant heights were measured on the 25th day, the dwarfing effect of cinnamic acid aqueous solution on melon young plants was examined. The results are shown in Table 25. From the results in Table 25, it became evident that the cinnamic acid aqueous solutions are effective in dwarfing melon young plants.

Table 25

| Tested Groups | Plant Height (cm) | Dwarfing Rate (%) |
|---|---|---|
| 0.05% Aqueous Solution Addition Group | 6.3 | 4.5 |
| 0.2% Aqueous Solution Addition Group | 4.1 | 37.9 |
| Comparative Group | 6.6 | |

Example 26

(1) Preparation of 0.2% and 0.4% cinnamic acid aqueous solutions

18.4g of sodium hydroxide was dissolved in 400ml of distilled water at 20°C, 50g of cinnamic acid was added to the sodium hydroxide solution and dissolved by stirring, the resultant solution is diluted with distilled water until the total volume of solution was 500ml, and thus a cinnamic acid aqueous solution (pH8. 8) was prepared in a concentration of 10%. The aqueous solution was further diluted with distilled water 50 times or 25 times, and 0.2% cinnamic acid aqueous solution and 0.4% cinnamic acid aqueous solution were prepared, respectively.

(2) Dwarfing test of hydrangea young plant

A cutting of a fresh shoot of hydrangea was planted in the soil of each pot (diameter of 10.5cm and depth of 8.5cm) and cultivated continuously after the cuttage. On the 42nd day, top pinching was performed, a young plant was adjusted to have a height of 8cm and four leaves and planted and fixed in a pot (diameter of 14.5cm and depth of 14.5cm). At this point, 100ml of 0.2% or 0.4% cinnamic acid aqueous solution prepared as described above was added to the nursery soil of 8 pots, and thus 0.2% cinnamic acid aqueous solution addition group and 0.4% cinnamic acid aqueous solution addition group were prepared. Further, 8 pots were prepared as a comparative group on which general watering was performed. The cultivation of young plants of each group was continued. On the 72nd day, heights of young plants in each group were measured, the dwarfing rate (%) was calculated, and the dwarfing effect of cinnamic acid aqueous solution on hydrangea was examined. The results are shown in Table 26. From the results in Table 26, it became evident that the cinnamic acid solutions are effective in dwarfing hydrangea young plants.

Table 26

| Tested Groups | Plant Height (cm) | Dwarfing Rate (%) |
|---|---|---|
| 0.2% Aqueous Solution Addition Group | 15.1 | 2.6 |
| 0.4% Aqueous Solution Addition Group | 11.7 | 24.5 |
| Comparative Group | 15.5 | |

As described above, according to the present invention, there is provided a plant growth regulator which has excellent workability and eco-friendliness, is safe with less toxicity, assuredly inhibits the spindly growth of plants, thereby exerts an excellent dwarfing effect, and is capable of improving the quality of gardening plants and agricultural crops.

**Claims**

1. A plant growth regulator containing cinnamic acid.

2. The plant growth regulator according to claim 1, wherein said cinnamic acid is dispersed in an aqueous medium.

3. The plant growth regulator according to claim 2, wherein said regulator contains a dispersant, and using the dispersant, the cinnamic acid is dispersed in the aqueous medium.

4. The plant growth regulator according to claim 1, wherein said cinnamic acid is dispersed in an aqueous medium with a dispersant.

5. The plant growth regulator according to claim 3 or 4, wherein said dispersant comprises at least one selected from the group consisting of lignin sulfonates and carboxymethylcelluloses.

6. The plant growth regulator according to claim 1, wherein said cinnamic acid is dissolved in the aqueous medium as cinnamate in a concentration exceeding maximum solubility thereof in water.

7. The plant growth regulator according to claim 6, wherein said cinnamic acid is dissolved in an aqueous solution of an alkaline solubilizer.

8. The plant growth regulator according to claim 7, wherein said solubilizer is at least one selected from the group consisting of tripolyphosphate salts, polyphosphate salts, phosphate salts, pyrophosphate salts, monohydrogen phosphate salts, dihydrogenphosphate salts, carbonate salts, monohydrogen carbonate salts, and acetate salts, hydroxides.

9. The plant growth regulator according to claim 1, wherein said solubilizer is at least one selected from the group consisting of tripolyphosphate salts, hydroxides, carbonate salts and acetate salts.

10. The plant growth regulator according to claim 9, wherein said tripolyphosphate salts are at least one of the group consisting of sodium tripolyphosphate, potassium triphosphate and ammonium triphophate; said hydroxides are at least one of the group consisting of sodium hydroxide, potassium hydroxide and ammonium hydroxide; said carbonate salts are at least one potassium carbonate, sodium carbonate and ammonium carbonate; and said acetate salts are at least one of the group consisting of potassium acetate, sodium acetate and ammonium acetate.

11. The plant growth regulator according to claim 1, wherein a concentration of said cinnamic acid is 25 weight % or less.

12. The plant growth regulator according to claim 1, wherein a plant is a young plant of at least one selected from the group consisting of poinsettia, geranium, hydrangea, chrysanthemum, lily, morning glory and petunia.

13. The plant growth regulator according to claim 1, wherein a plant is a young plant of at least one selected from the group consisting of Chinese cabbage, cabbage, carrot, green onion, onion, ging-geng-cai, Japanese radish, let-

**EP 1 459 627 A2**

tuce, field peas, cauliflower, broccoli, burdock, radish, turnip, tomato, cucumber, eggplant, squash, watermelon, prince melon, Cucumis melo var. makuwa, and melon.

14. A method of producing said plant growth regulator, which comprises mixing and dispersing cinnamic acid and an aqueous medium in the presence of a dispersing medium.

15. A method of producing said plant growth regulator, which comprises dissolving cinnamic acid in an aqueous solution of an alkaline solubilizer.

16. A method of dwarfing said young plant, which comprises applying to said young plant said plant growth regulator according to claim 1 in a ratio of 0.0001 to 0.2 parts by weight of cinnamic acid to 100 parts by weight of soil with which said young plant is reared.

17. A dwarfing plant produced by a method according to claim 16.